# EUROPEAN PATENT SPECIFICATION

(11) **EP 2 665 324 B1**
(45) Date of publication and mention of the grant of the patent: **14.02.2018**
(21) Application number: 11874970.4
(22) Date of filing: 31.10.2011
(51) Int. Cl.: H04W 76/02, H04L 12/723, H04J 14/02, H04J 3/16, H04L 12/911, H04L 12/46

(54) **CONNECTION ESTABLISHMENT METHOD AND DEVICE FOR FORWARDING ADJACENCY - LABEL SWITCHED PATH**
VERBINDUNGSHERSTELLUNGSVERFAHREN UND VORRICHTUNG ZUR WEITERLEITUNG EINES BENACHBARTEN LABEL-SWITCH-PFADES
PROCÉDÉ ET DISPOSITIF D'ÉTABLISSEMENT DE CONNEXION DESTINÉS À UN CHEMIN À COMMUTATION D'ÉTIQUETTE DE CONTIGUÏTÉ DE TRANSFERT

(43) Date of publication of application: 20.11.2013
(73) Proprietor: Huawei Technologies Co., Ltd., Longgang District Shenzhen, Guangdong 518129 (CN)
(72) Inventor: LIN, Yi, Shenzhen Guangdong 518129 (CN); ZHANG, Fatai, Shenzhen Guangdong 518129 (CN)
(74) Representative: Maiwald Patentanwalts GmbH
(86) International application number: PCT/CN2011/081597
(87) International publication number: WO 2013/063751

(56) References cited:
- CN-A- 1 592 252
- CN-A- 101 695 144
- CN-A- 102 143 066
- LOA ANDERSSON ET AL: "MPLS-TP Control Plane Framework; draft-ietf-ccamp-mpls-tp-cp-framework-03.t xt", MPLS-TP CONTROL PLANE FRAMEWORK; DRAFT-IETF-CCAMP-MPLS-TP-CP-FRAMEWORK-03.T XT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 3, 15 October 2010 (2010-10-15), pages 1-54, XP015071699, [retrieved on 2010-10-15]
- KOMPELLA Y REKHTER JUNIPER NETWORKS K: "Label Switched Paths (LSP) Hierarchy with Generalized Multi-Protocol Label Switching (GMPLS) Traffic Engineering (TE); rfc4206.txt", 20051001, 1 October 2005 (2005-10-01), XP015054887, ISSN: 0000-0003
- FATAI ZHANG DAN LI HUAWEI F JAVIER JIMENEZ CHICO O GONZALEZ DE DIOS TELEFONICA INVESTIGACION Y DESARROLLO C MARGARIA C NOKIA SIEME: "GMPLS-based Hierarchy LSP creation in Multi-Region and Multi-Layer Networks; draft-zhang-ccamp-gmpls-h-lsp-mln-04.txt", GMPLS-BASED HIERARCHY LSP CREATION IN MULTI-REGION AND MULTI-LAYER NETWORKS; DRAFT-ZHANG-CCAMP-GMPLS-H-LSP-MLN-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLA, no. 4, 11 July 2011 (2011-07-11), pages 1-17, XP015077351, [retrieved on 2011-07-11]
- Fatai Zhang: "Generalized Multi-Protocol Label Switching (GMPLS) Signaling Extensions for the evolving G.709 Optical Transport Networks Control", , 1 January 2009 (2009-01-01), XP055148669, Retrieved from the Internet: URL:http://tools.ietf.org/pdf/draft-zhang- ccamp-gmpls-evolving-g709-01.pdf [retrieved on 2014-10-23]

## Description

### TECHNICAL FIELD

The present invention relates to the field of network technologies, and in particular, to a method and an apparatus for establishing a forwarding adjacency - label switched path connection.

### BACKGROUND

A control plane mainly implements protocols including link management protocols, routing protocols, and signaling protocols, and accordingly achieves functions of automatic link discovery, path calculation, and automatic path establishment on a network. A control plane technology may be applied to various transport networks. Currently, the Internet Engineering Task Force (Internet Engineering Task Force, IETF for short) standard organization has defined the General Multi-Protocol Label Switching (General Multi-Protocol Label Switching, GMPLS for short) protocol stack to implement various functions of the control plane. In terms of using signaling to establish a path, the IETF standard organization adopts the Resource ReserVation Protocol - Traffic Engineering (Resource ReserVation Protocol - Traffic Engineering, RSVP-TE for short) protocol.

For control over a multi-layer network, the control plane technology is adopted. On a multi-layer network, any two adjacent networks are taken as a client layer network and a server layer network, where the client layer network is located above the server layer network. The server layer network may use link resources at its layer to establish a connection from a source end to a destination end. This connection is called a forwarding adjacency - label switched path (Forwarding Adjacency - Label Switched Path, FA-LSP for short). From the perspective of the client layer network, the FA-LSP is considered as a logical link. This logical link is called a forwarding adjacency (Forwarding Adjacency, FA for short). In addition, FA information may be distributed on the client layer network. The client layer network may use FA resources at its layer to establish another connection from the source end to the destination end.

On the multi-layer network, for the client layer network, types of client signals on different layer networks are different, and types of client signals on a same layer network may be different. On the client layer network, each type of client signals supports an adaptation mode corresponding to the client signals. It should be noted that a processing manner is to process client signals so that they can be transferred in an FA-LSP on the server layer network, and another processing manner is to process client signals transferred in an FA-LSP on the server layer network so as to obtain the client signals. The preceding two processing manner may be understood as "adaptation modes of client signals". Any port on a node may support one or more types of client signals. Different ports may support different types of client signals or a same type of client signals. For different types of client signals, adaptation modes that they support may be different. For a same type of client signals, adaptation modes that they support may be same or different. Any type of client signals may support one or more adaptation modes. For example, on a synchronous digital hierarchy (Synchronous Digital Hierarchy, SDH for short) network, a certain port of a node supports an E1 (at a rate or 2.048 Mbps) client signal, where an adaptation mode used by the port to support the E1 client signal may be an asynchronous mapping (Asynchronous mapping) adaptation mode and/or a byte synchronous mapping (Byte synchronous mapping) adaptation mode; and on an optical transport network (Optical Transport Network, OTN for short), a process for multiplexing an optical channel data unit (Optical channel Data Unit, ODU for short) with different granularities may be considered as an adaptation process of a multi-layer network, and a port of a certain ODUk link may support an ODUj (j<k) client signal, where an adaptation mode used by the port to support the ODUj client signal may be a multiplexing mode whose tributary slot granularity is 2.5 Gbps or 1.25 Gbps, payload type is 20 or 21, and framing procedure is AMP or GMP.

In the prior art, a signaling message may be used to establish an FA-LSP on a server layer network.
The article by LOA ANDERSSON ET AL: titled "MPLS-TP Control Plane Framework; draft-ietf-ccamp-mpls-tp-cp-framework-03.txt",MPLS-TP CONTROL PLANE FRAMEWORK; DRAFT-IETF- CCAMP-MPLS-TP-CP-FRAMEWORK-03.TXT, INTERNET ENGINEERING TASK FORCE, INTERNET SOCIETY(ISOC) 4, RUE DES FALAISES CH 1205 GENEVA, SWITZERLAND, no. 3, 15 October 2010, pages 1-54, discloses that MPLS Transport Profile (MPLS-TP) supports static provisioning of transport paths via a Network Management System (NMS), and dynamic provisioning of transport paths via a control plane provides the framework for MPLS-TP dynamic provisioning, and covers control plane addressing, routing, path computation, signaling, traffic engineering, and path recovery. MPLS-TP uses GMPLS as the control plane for MPLS-TP LSPs. MPLS-TP also uses the control plane for Pseudowires(PWs) The article by KOMPELLA Y REKHTER JUNIPER NETWORKS K: titeled " Label Switched Paths (LSP) Hierarchy with Generalized Multi-Protocol Label Switching (GMPLS) Traffic Engineering (TE)", published 1 October 2005, discloses that to improve scalability of Generalized Multi-Protocol Label Switching (GMPLS) it may be useful to aggregate Label Switched Paths (LSPs) by creating a hierarchy of such LSPs. A way to create such a hierarchy is by (a) a Label Switching Router (LSR) creating a Traffic Engineering Label Switched Path (TE LSP), (b) the LSR forming a forwarding adjacency (FA) out of that LSP (by advertising this LSP as Traffic Engineering (TE) link into the same instance of ISIS/OSPF as the one that was used to create the LSP), (c) allowing other LSRs to use FAs for their path computation, and (d) nesting of LSPs originated by other LSRs into that LSP (by using the label stack construct)

The article by FATAI ZHANG DAN LI HUAWEI F JAVIER JIMENEZ CHICO O GONZALEZ DE DIOS TELEFONICA INVESTIGACION Y DESARROLLO C MARGARIA C NOKIA SIEME: titled "GMPLS-based Hierarchy LSP creation in Multi-Region and Multi-Layer Network", INTERNET ENGINEERING TASK FORCE, IETF; STANDARDWORKINGDRAFT, INTERNET SOCIETY(ISOC) 4, RUE DES FALAISES CH-1205 GENEVA, SWITZERLAND, no. 4, 11 July 2011, pages 1-17, discloses that the hierarchy LSP creation models in the Multi-Region and Multi-Layer Networks (MRN/MLN), and provides to create the hierarchy LSP through multiple layer networks.

### SUMMARY

The present invention provides a method for establishing a forwarding adjacency - label switched path, FA-LSP, connection, according to claim 1, with an embodiment as defined in claim 2. The invention also provides a first node according to claim 3. The invention aims at ensuring that an FA-LSP, after being established, is capable of bearing client signals that meet requirements of a client layer network.

According to one aspect, an embodiment of the present invention provides a method for establishing a forwarding adjacency - label switched path FA-LSP connection.

The method is applied to a first node that serves as the penultimate hop node in an FA-LSP to be established and includes:
acquiring a first connection establishment request message, where the first connection establishment request message includes a signal type of the FA-LSP to be established, an adaptation mode from a signal of the FA-LSP to a link on a server layer network, an adaptation relationship from a client signal to a signal of the FA-LSP and an adaptation mode corresponding to the adaptation relationship;
determining, according to the signal type of the FA-LSP to be established, the adaptation mode from the signal of the FA-LSP to the link on the server layer network, the adaptation relationship
from the client signal to the signal of the FA-LSP, the adaptation mode corresponding to the adaptation relationship, and link peer information saved by the first node, a destination link between the first node and a destination node of the FA-LSP to be established, wherein the port of the destination link on the destination node in the FA-LSP to be established supports the signal type of the FA-LSP to be established and, the adaptation mode from the signal of the FA-LSP to the link on the server layer network, and further supports the adaptation relationship from the client signal to the signal of the FA-LSP and the adaptation mode corresponding to the adaptation relationship; and
sending a second connection establishment request message to the destination node, where the second connection establishment request message carries destination link information, so that the destination node establishes a connection to the first node through the destination link according to the second connection establishment request message.

According to still another aspect, an embodiment of the present invention provides an apparatus for establishing a forwarding adjacency - label switched path FA-LSP connection. The apparatus is applied to a first node that serves as the penultimate hop node in an FA-LSP to be established and includes:
a first acquiring unit, configured to acquire a first connection establishment request message, where the first connection establishment request message includes a signal type of the FA-LSP to be established, an adaptation mode from a signal of the FA-LSP to a link on a server layer network, an adaptation relationship from a client signal to a signal of the FA-LSP and an adaptation mode corresponding to the adaptation relationship;
a first determining unit, configured to determine, according to the signal type of the FA-LSP to be established, the adaptation mode from the signal of the FA-LSP to the link on the server layer network, the adaptation relationship from the client signal to the signal of the FA-LSP and the adaptation mode corresponding to the adaptation relationship that are acquired by the first acquiring unit and link peer information saved by the first node, a destination link between the first node and a destination node of the FA-LSP to be established, wherein the port of the destination link on the destination node in the FA-LSP to be established supports the signal type of the FA-LSP to be established and the adaptation mode from the signal of the FA-LSP to the link on the server layer network, and further supports the adaptation relationship from the client signal to the signal of the FA-LSP and the adaptation mode corresponding to the adaptation relationship; and
a first sending unit, configured to send a second connection establishment request message to the destination node, where the second connection establishment request message carries destination link information, so that the destination node establishes a connection to the first node through the destination link according to the second connection establishment request message.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person skilled in the art may still derive other drawings from these accompanying drawings without creative efforts,
FIG. 1 (a) is a first flowchart of a method for establishing a forwarding adjacency - label switched path connection according to an object 1;
FIG. 1 (b) is a second flowchart of a method for establishing a forwarding adjacency - label switched path connection according to object 1;
FIG. 2 (a) illustrates a network system architecture according to Embodiment of the present invention;
FIG. 2 (b) is a flowchart of a method for establishing a forwarding adjacency - label switched path connection according to Embodiments of the present invention;
FIG. 2 (c) is a flowchart of a method for establishing a forwarding adjacency - label switched path connection according to object 2;
FIG. 3 is a first schematic structural diagram of an apparatus for establishing a forwarding adjacency - label switched path connection according to object 3;
FIG. 4 is a schematic structural diagram of a first acquiring unit of the apparatus for establishing a forwarding adjacency - label switched path connection as illustrated in FIG. 3;
FIG. 5 is a schematic structural diagram of a first determining unit of the apparatus for establishing a forwarding adjacency - label switched path connection as illustrated in FIG. 3;
FIG. 6 illustrates a second apparatus for establishing a forwarding adjacency - label switched path connection according to object 3; and
FIG. 7 illustrates a third apparatus for establishing a forwarding adjacency - label switched path connection according to object 3.

### DESCRIPTION OF EMBODIMENTS

The following description, which is for description but not for limitation, provides details such as a specific apparatus structure and a technology so that the present invention can be thoroughly understood. However, a person skilled in the art should understand that the present invention can also be implemented in another embodiment without these details. In another case, a detailed description about a well-known apparatus, circuit, and method is omitted to prevent unnecessary details from obscuring the description about the present invention.

### Description of an object 1

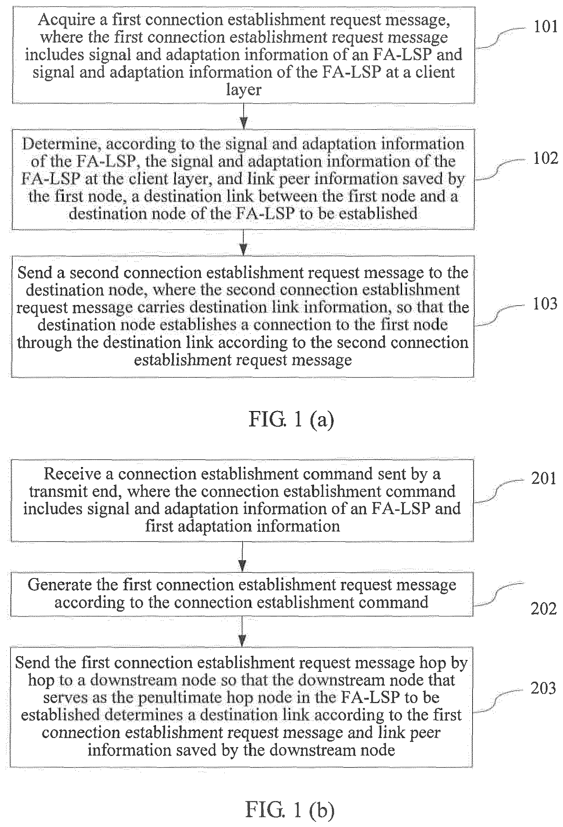

As shown in FIG. 1 (a), an object 1 provides a method for establishing an FA-LSP connection. The method is applied to a first node that serves as the penultimate hop node in an FA-LSP to be established and includes:

101. Acquire a first connection establishment request message, where the first connection establishment request message includes signal and adaptation information of an FA-LSP and signal and adaptation information of the FA-LSP at a client layer.

The signal and adaptation information of the FA-LSP may include a signal type of the FA-LSP to be established and an adaptation mode of the FA-LSP, or may include only the signal type of the FA-LSP to be established. The signal and adaptation information of the FA-LSP at the client layer may include an adaptation relationship of client signals required to be supported by the FA-LSP to be established and an adaptation mode required to be supported by the FA-LSP to be established, or may include only the adaptation relationship of the client signals required to be supported by the FA-LSP to be established. It should be noted that the adaptation relationship is adaptation supporting an n^{th} client signal type to an (n-1)^{th} client signal type (n >= 2), and adaptation from the n^{th} client signal type to the (n-1)^{th} client signal type may be achieved by using an adaptation mode that corresponds to the adaptation relationship. For example, if the adaptation relationship is adaptation from a client signal type C11 to a client signal type C1, the adaptation mode is A11.

In this object 1, the adaptation mode of the FA-LSP and the adaptation mode required to be supported by the FA-LSP to be established are optional. For adaptation relationships of some client signals, only one adaptation mode may be adopted for adaptation to access a server layer. In this case, an adaptation relationship implicitly specifies an adaptation mode. Therefore, information about the adaptation mode is optional.

In this object 1, the acquiring a first connection establishment request message may be implemented by using the following methods or other methods:
Method 1: When the first node is not a source node in the FA-LSP to be established, the first connection establishment request message may be sent by an upstream node of the first node.
Method 2: When the first node is the source node in the FA-LSP to be established, the first node first receives a connection establishment command sent by a transmit end, where the connection establishment command includes the signal and adaptation information of the FA-LSP and first adaptation information, and generates the first connection establishment request message according to the connection establishment command.

The first adaptation information may include an adaptation relationship of client signals that the transmit end requests the FA-LSP to be established to support and an adaptation mode that the transmit end requests the FA-LSP to be established to support. The first adaptation information may include only the adaptation relationship of the client signals that the transmit end requests the FA-LSP to be established to support. This is not limited herein. The signal and adaptation information of the FA-LSP at the client layer includes the first adaptation information. Specifically, when the first adaptation information includes the adaptation relationship of the client signals that the transmit end requests the FA-LSP to be established to support and the adaptation mode that the transmit end requests the FA-LSP to be established to support, in the signal and adaptation information of the FA-LSP at the client layer, the adaptation relationship of the client signals required to be supported by the FA-LSP to be established includes the adaptation relationship of the client signals that the transmit end requests the FA-LSP to be established to support, and the adaptation mode required to be supported by the FA-LSP to be established includes the adaptation mode that the transmit end requests the FA-LSP to be established to support.

It should be noted that in this object 1 the transmit end may be a network management system or may be a source node of an FA-LSP connection to be established on a client layer network.

102. Determine, according to the signal and adaptation information of the FA-LSP, the signal and adaptation information of the FA-LSP at the client layer, and link peer information saved by the first node, a destination link between the first node and a destination node of the FA-LSP to be established.

The link peer information includes an adaptation relationship of client signals supported by a peer of a link and an adaptation mode corresponding to the adaptation relationship. The adaptation relationship includes: adaptation supporting an n^{th} client signal to an (n-1)^{th} client signal, ..., adaptation supporting a second client signal to a first client signal, and adaptation supporting the first client signal to the link, and the adaptation mode includes: an adaptation mode from the n^{th} client signal to the (n-1)^{th} client signal, ..., an adaptation mode from the second client signal to the first client signal, and an adaptation mode from the first client signal to the link, where n >= 2. The port of the destination link on the destination node in the FA-LSP to be established supports a signal type of the FA-LSP to be established and an adaptation mode corresponding to the signal type, and further supports the adaptation relationship of the client signals required to be supported by the FA-LSP to be established and an adaptation mode corresponding to the adaptation relationship.

In this object 1, the step 102 may include:
determining, according to the signal and adaptation information of the FA-LSP and the link peer information saved by the first node, a link that supports the signals of the FA-LSP, where the first client signal in the link peer information of the link includes the signal type of the FA-LSP to be established, and the adaptation mode from the first client signal to the link includes the adaptation mode of the FA-LSP to be established; and
determining, according to the signal and adaptation information of the FA-LSP at the client layer and the link peer information saved by the first node, a destination link from the link that supports the signals of the FA-LSP, where the adaptation supporting the n^{th} client signal to the (n-1)^{th} client signal, ..., and the adaptation supporting the second client signal to the first client signal in peer information of the destination link include the adaptation relationship of the client signals required to be supported by the FA-LSP to be established, and the adaptation mode from the n^{th} client signal to the (n-1)^{th} client signal, ..., and the adaptation mode from the second client signal to the first client signal include the adaptation mode corresponding to the adaptation relationship of the client signals required to be supported by the FA-LSP to be established.

In this object 1, the link peer information saved by the first node may be implemented through manual configuration, and the link peer information of the first node may be acquired through a related protocol, such as the Link Management Protocol (Link Management Protocol, LMP for short) and the Open Shortest Path First (Open Shortest Path First, OSPF for short) protocol. No further details are provided herein.

103. Send a second connection establishment request message to the destination node, where the second connection establishment request message carries destination link information, so that the destination node establishes a connection to the first node through the destination link according to the second connection establishment request message.

As shown in FIG. 1 (b), this object 1 further provides a method for establishing a forwarding adjacency - label switched path FA-LSP connection. The method is applied to a second node that serves as a source node in an FA-LSP to be established and includes:

201. Receive a connection establishment command sent by a transmit end, where the connection establishment command includes signal and adaptation information of an FA-LSP and first adaptation information.

The signal and adaptation information of the FA-LSP may include a signal type of the FA-LSP to be established and an adaptation mode of the FA-LSP to be established, or the signal and adaptation information of the FA-LSP may include only the signal type of the FA-LSP to be established. The first adaptation information may include an adaptation relationship of client signals that the transmit end requests the FA-LSP to be established to support and an adaptation mode that the transmit end requests the FA-LSP to be established to support, or the first adaptation information may include only the adaptation relationship of the client signals that the transmit end requests the FA-LSP to be established to support. This is not limited herein.

202. Generate the first connection establishment request message according to the connection establishment command.

The first connection establishment request message includes the signal and adaptation information of the FA-LSP and signal and adaptation information of the FA-LSP at a client layer, where the signal and adaptation information of the FA-LSP at the client layer may include the first adaptation information.

In this object 1, steps 201 and 202 are similar to the theory of the Method 2 described in step 101. Therefore, no further details are provided herein.

203. Send the first connection establishment request message hop by hop to a downstream node so that the downstream node that serves as the penultimate hop node in the FA-LSP to be established determines a destination link according to the first connection establishment request message and link peer information saved by the downstream node.

According to the method for establishing a forwarding adjacency - label switched path connection provided in this object 1, the first node is capable of determining, according to the signal and adaptation information of the FA-LSP, the signal and adaptation information of the FA-LSP at the client layer, and the link peer information saved by the first node, a destination link between the first node and a destination node of the FA-LSP to be established, and sending a second establishment connection request message that carries destination link information to the destination node of the FA-LSP to be established, so that the destination node establishes a connection to the first node through the destination link according to the second connection establishment request message. Therefore, the FA-LSP, after being established, is capable of bearing client signals that meet requirements of a client layer network.

### Embodiment

To enable a person skilled in the art to more clearly understand the technical solution provided in this embodiment of the present invention, the following describes in detail a method for establishing an FA-LSP connection according to Embodiment of the present invention.

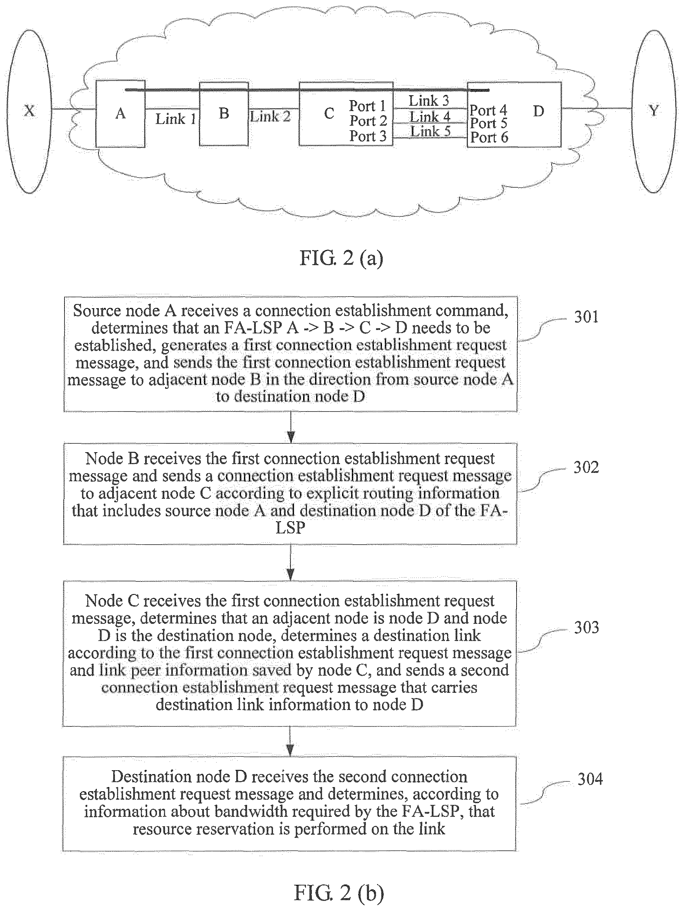

Refer to FIG. 2 (a). FIG. 2 (a) illustrates a network system architecture according to this embodiment of the present invention, where the network system architecture includes a multi-layer network. It can be known from FIG. 2 (a) that on the multi-layer network, nodes A, B, C, and D are located on a server layer network, nodes X and Y are located on a client layer network, node X is connected to node A, node Y is connected to node D, node A is connected to node B through link 1, node B is connected to node C through link 2, and node C is connected to node D through link 3, link 4, and link 5. The bold line in FIG. 2 (a) indicates a connection that passes through nodes A, B, C, and D on the server layer network, that is, an FA-LSP. In this embodiment, node A is a second node that serves as a source node in an FA-LSP to be established, and node C is a first node that serves as the penultimate hop node in the FA-LSP to be established.

Nodes A, B, C and D on the server layer network may obtain an adaptation relationship and an adaptation mode of client signals supported by a port on a node of a peer of a link. The following takes node C as an example for description.

Obtaining, by node C, an adaptation relationship and an adaptation mode of client signals supported by a port of a peer of a link connected to node C includes:
obtaining, by node C, adaptation relationships and adaptation modes of client signals supported by three ports of link 3, link 4, and link 5 on node D. Specifically, for example:
   1) An adaptation relationship of client signals supported by a port through which link 3 is connected to node D and an adaptation mode corresponding to the adaptation relationship include:
      (1) adaptation from client signal C11 to client signal C1, where adaptation modes from client signal C11 to client signal C1 are A11 and A12 and a supported adaptation mode from client signal C1 to the current link is A1, which is denoted by: C11 (A11 and A12) -> C1 (A1);
      (2) adaptation from client signal C131 to client signal C13, where an adaptation mode from client signal C131 to client signal C13 is A131, and adaptation from client signal C13 to client signal C1, where an adaptation mode from client signal C 13 to client signal C1 is A 13 and a supported adaptation mode from client signal C1 to the current link is A1, which are denoted by: C131 (A131) -> C13 and C13 (A13) -> C1 (A1); and
      (3) adaptation from client signal C21 to client signal C2, where an adaptation mode from client signal C21 to client signal C1 is A21 and a supported adaptation mode from client signal C1 to the current link is A1, which is denoted by: C21 (A21) -> C1 (A1).
   2) An adaptation relationship of client signals supported by a port through which link 4 is connected to node D and an adaptation mode corresponding to the adaptation relationship include:
      Adaptation from client signal C11 to client signal C1, where adaptation modes from client signal C11 to client signal C1 are A11 and A12 and a supported adaptation mode from client signal C1 to the current link is A1, which is denoted by: C11 (A11 and A12) -> C1 (A1).
   3) An adaptation relationship of client signals supported by a port through which link 5 is connected to node D and an adaptation mode corresponding to the adaptation relationship include:
      (1) adaptation from client signal C11 to client signal C1, where an adaptation mode from client signal C11 to client signal C1 is A12 and a supported adaptation mode from client signal C1 to the current link is A1, which is denoted by: C11 (A12) -> C1 (A1); and
      (2) adaptation from client signal C21 to client signal C2, where an adaptation mode from client signal C21 to client signal C1 is A21 and a supported adaptation mode from client signal C1 to the current link is A1, which is denoted by: C21 (A21) -> C1 (A1).

Node C further obtains an adaptation relationship and an adaptation mode of client signals supported by a port of link 2 on node B.

A process of obtaining, by nodes A, B, C, and D, adaptation relationships and adaptation modes of client signals may be implemented by using the Link Management Protocol (Link Management Protocol, LMP for short), by using a routing protocol, for example, the Open Shortest Path First (Open Shortest Path First, OSPF for short) protocol, or by using a manual configuration method.

Node C and node D are used as examples for further description if the LMP protocol is used to acquire information. For example, port 1 of node C is connected to port 4 of node D through link 3, port 2 of node C is connected to port 5 of node D through link 4, and port 3 of node C is connected to port 6 of node D through link 5. Node C sends an LMP protocol message to node D, where the LMP protocol message carries adaptation relationships and adaptation modes of client signals supported by port 1, port 2, and port 3 of node C. After receiving the LMP protocol message, node D obtains the adaptation relationships and adaptation modes of the client signals supported by the peer. Similarly, node D also sends an LMP protocol message to node C, where the LMP protocol message carries adaptation relationships and adaptation modes of client signals supported by port 4, port 5, and port 6 of node D. After receiving the LMP protocol message, node C obtains the adaptation relationships and adaptation modes of the client signals supported by the peer.

If a routing protocol is used to acquire information, each node on the network performs flooding for an adaptation relationship and an adaptation mode of client signals supported by a port through which the node is connected to the link. Therefore, each node may obtain adaptation relationships and adaptation modes of client signals supported by another node on the network.

According to the preceding adaptation relationships and corresponding adaptation modes, it can be known that for some adaptation relationships only one adaptation mode may be adopted for adaptation to the server layer. In this case, adaptation relationships implicitly specify the adaptation mode or the adaptation mode implicitly specifies the adaptation relationships, so that nodes A, B, C, and D may obtain only supported adaptation relationships or adaptation modes to form link peer information.

The following describes in detail the technical solution for establishing a connection by nodes A, B, C, and D on the server layer network with reference to FIG. 2 (a).

As shown in FIG. 2 (b), a method for establishing an FA-LSP connection according to this embodiment of the present invention includes:

301. Source node A receives a connection establishment command, determines that an FA-LSP A -> B -> C -> D needs to be established, generates a first connection establishment request message, and sends the first connection establishment request message to adjacent node B in the direction from source node A to destination node D.

In this embodiment, the connection establishment command may carry information about bandwidth required by an FA-LSP to be established on the server layer network, information about a source node and a destination node of the FA-LSP to be established, a signal type of the FA-LSP to be established and an adaptation mode corresponding to the signal type, an adaptation relationship of client signals required to be supported by the FA-LSP to be established, and an adaptation mode of the client signals required to be supported by the FA-LSP to be established. Source node A generates the first connection establishment request message according to the connection establishment command.

The first connection establishment request message may carry information about bandwidth required by the FA-LSP, information about source node A and destination node D of the FA-LSP, a signal type of the FA-LSP and an adaptation mode corresponding to the signal type, and an adaptation relationship and an adaptation mode of client signals supported by the FA-LSP. Optionally, explicit routing information may be also included.

For example, the signal type of the FA-LSP is C1. As client layer signals on the server layer network, an adaptation mode for C1 adapting to a link on the server layer network is A1.

The adaptation relationship of the client signals supported by the FA-LSP includes adaptation from client signal C11 to client signal C1 (that is, a signal of the FA-LSP), and adaptation from client signal C 131 to client signal C13 and adaptation from client signal C13 to client signal C1. The adaptation mode of the client signals supported by the FA-LSP includes adaptation mode A11 from client signal C11 to client signal C1, adaptation mode A131 from client signal C131 to client signal C13, and adaptation mode A 13 from client signal C13 to client signal C1.

It should be noted that the adaptation relationship and adaptation mode of the client signals carried in the first connection establishment request message may include not only the adaptation relationship and adaptation mode of the client signals carried in the connection establishment command, but also may include an adaptation relationship and an adaptation mode supported by the source node or an adaptation relationship and an adaptation mode of client signals determined by the source node according to other requirements (such as a local policy).

Specifically, source node A may use the RSVP-TE protocol and specify, in a Path (path) message, the signal type and the adaptation mode of the FA-LSP to be established and the adaptation relationship and the adaptation mode of the client signals required to be supported by the FA-LSP to be established, where the message is sent to a downstream node hop by hop along the FA-LSP path.

In the RSVP-TE protocol, a G-PID (Generalized-Payload Identifier, generalized-payload identifier) may be used to specify an adaptation relationship of client signals and a corresponding adaptation mode. One G-PID value corresponds to one {Adaptation relationship of client signals, adaptation mode}. Therefore, one G-PID list may be added in the Path message to specify client signals required to be supported by the FA-LSP and a required adaptation mode of the client signals. Certainly, a client signal type required to be supported and a corresponding adaptation mode may be directly listed in the Path message.

302. Node B receives the first connection establishment request message and sends a connection establishment request message to adjacent node C according to the explicit routing information including the information about source node A and destination node D of the FA-LSP.

303. Node C receives the first connection establishment request message, determines that an adjacent node is node D and node D is the destination node, determines a destination link according to the first connection establishment request message and link peer information saved by node C, and sends a second connection establishment request message that carries destination link information to node D.

Specifically, if the first connection establishment request message only carries information about the source node and the destination node, node C determines that the adjacent node is node D and node D is the destination node according to route calculation; and if the first connection establishment request message carries the explicit routing information including the information about the source node and the destination node, node C determines that the adjacent node is node D and node D is the destination node according to the explicit routing information. This is not limited in detail herein.

In this embodiment, specific implementation of the determining a destination link according to the first connection establishment request message and link peer information saved by node C and the sending a second connection establishment request message that carries destination link information to node D is: determining, according to the obtained adaptation relationships and adaptation modes of client signals supported by three ports of destination node D and the first connection establishment request message, the destination link that connects the current node C and destination node D, where an adaptation relationship and an adaptation mode of client signals supported by a port, which corresponds to the link, of destination node D meet requirements on the signal type of the FA-LSP and the adaptation mode corresponding to the signal type and meet requirements on the adaptation relationship and adaptation mode of the client signals supported by the FA-LSP; and sending the second connection establishment request message to destination node D, where the second connection establishment request message carries information that specifies the link.

For example, an adaptation relationship of client signals supported by a port through which link 3 is connected to node D and an adaptation mode corresponding to the adaptation relationship include: C11 (A11 and A12) -> C1 (A1), C131 (A131) -> C13 and C13 (A13) -> C1 (A1), and C21 (A21) -> C1 (A1). This meets the signal type (C1) of the FA-LSP in the first establishment connection request message and the adaptation mode (A1) corresponding to the signal type and meets the adaptation relationship and adaptation mode of the client signals required to be supported by the FA-LSP in the first establishment connection request message (that is, C11 (A11) -> C1, C131 (A131) -> C13, and C13 (A13) -> C1). Therefore, link 3 meets the requirements. However, link 4 does not support C131 (A131) -> C13, C13 (A13) -> C1 (A1), and C21 (A21) -> C1 (A1), and link 5 does not support C131 (A131) -> C13, C13 (A13) -> C1 (A1), and C11 (A11)->C1 (A1). Therefore, links 4 and 5 do not meet the requirements.

It should be noted that if multiple links meet the requirements, one of the links may be selected as the destination link according to a local policy. The local policy, for example, may be that a link with a small ID has a high priority or a link with a large weight value has a high priority. In this embodiment, the local policy that the priority of a link with a smaller ID is higher than that of a link with a larger ID is adopted. Therefore, node C determines that link 3 is the link connecting node C and destination node D. This is only a specific example and does not limit the present invention.

304. Destination node D receives the second connection establishment request message and determines, according to information about bandwidth required by the FA-LSP, that resource reservation is performed on the link.

To implement the determining, by node D according to information about bandwidth required by the FA-LSP, that resource reservation is performed on the link in step 304, the following methods may be used:
Method 1: Node C may have a label included in the connection establishment request message, where the label specifies reserved bandwidth resources on the selected link; and
Method 2: After receiving the connection establishment request message sent by node C, node D feeds back a response message (for example, an Resv message according to the RSVP-TE protocol) to node C, where the message includes a label specifying reserved bandwidth resources on the selected link.

It should be noted that each node performs, according to a label in the Path or Resv message, operations such as resource reservation and cross establishment of a data plane to establish the FA-LSP.

According to the method for establishing a forwarding adjacency - label switched path connection provided in this embodiment of the present invention, the first node is capable of determining, according to the signal and adaptation information of the FA-LSP, the signal and adaptation information of the FA-LSP at the client layer, and the link peer information saved by the first node, a destination link between the first node and a destination node of the FA-LSP to be established, and sending a second establishment connection request message that carries destination link information to the destination node of the FA-LSP to be established, so that the destination node establishes a connection to the first node through the destination link according to the second connection establishment request message. Therefore, the FA-LSP, after being established, is capable of bearing client signals that meet requirements of a client layer network.

### Description of an object 2

A method according to an object 2 is applied to an optical transport network (Optical Transport Network, OTN for short). On the OTN, client signal types typically include: ODUO (Optical channel Data Unit, optical channel data unit), ODU1, ODU2, ODU2e, ODU3, and ODUflex. An adaptation mode of client signals is commonly called "multiplexing" or "mapping". For example, "multiplexing" commonly means adapting ODUj to ODUk (j<k); and "mapping" commonly means adapting ODUk to OTUk (Optical channel Transport Unit, optical channel transport unit). The adaptation mode at least includes one of the following information types: tributary slot granularity type (Tributary Slot Granularity, TSG for short) and payload type (Payload Type, PT for short). Optionally, the adaptation mode may further include a framing procedure. When a client signal type and the TSG in the adaptation mode are determined, the framing procedure and the PT in the adaptation mode may be derived. Similarly, when the client signal type and the PT in the adaptation mode are determined, the TSG and framing procedure in the adaptation mode may be derived. It should be noted that currently there are two tributary slot granularity types, namely, 1.25 Gbps and 2.5 Gbps, and currently there are also two types of framing procedures, namely, an asynchronous mapping procedure (Asynchronous Mapping Procedure, AMP for short) and a generic mapping procedure (Generic Mapping Procedure, GMP for short).

The OTN supports one-step or multi-step multiplexing. For example, low-order ODU may be multiplexed into high-order ODU, and the high-order ODU may be further multiplexed into higher-order ODU, and so on. For another example, ODU0 is multiplexed into an ODU2 FA-LSP, and the ODU2 FA-LSP is further multiplexed into an ODU3 link. For a two-step multiplexing ODU0->ODU2->ODU3, ODU2 may be considered as a client signal of ODU3, and ODUO may be considered as client a signal of ODU2. A one-step or multi-step multiplexing relationship supported by an ODU link or an ODU FA is an adaptation relationship of client signals supported by the ODU link or the ODU FA.

The following takes a server layer network that is an OTN as an example for description in detail with reference to FIG. 2 (a). In this object 2, links 1, 2, 3, 4, and 5 are ODU3 links, and the following takes node C as an example for description.

Obtaining, by node C, an adaptation relationship and an adaptation mode of client signals supported by a port of a peer of a link connected to node C includes:
obtaining, by node C, adaptation relationships of client signals supported by three ports of link 3, link 4, and link 5 on node D and adaptation modes corresponding to the adaptation relationships. Specifically, for example:
   link 3: from client signal ODUO to client signal ODU1: TSG = 1.25 Gbps, PT = 21, AMP; from client signal ODUO to client signal ODU2: TSG = 1.25 Gbps, PT = 21, GMP; from client signal ODU1 to client signal ODU2: TSG = 1.25 Gbps, PT = 21, AMP; and from client signal ODU2 to client signal ODU3: TSG = 1.25 Gbps, PT = 21, AMP;
   link 4: from client signal ODUO to client signal ODU2: TSG = 1.25 Gbps, PT = 21, GMP; and from client signal ODU2 to client signal ODU3: TSG = 1.25 Gbps, PT = 21, AMP; and
   link 5: from client signal ODUO to client signal ODU1: TSG = 1.25 Gbps, PT = 21, AMP; from client signal ODU1 to client signal ODU2: TSG = 1.25 Gbps, PT = 21, AMP; and from client signal ODU2 to client signal ODU3: TSG = 1.25 Gbps, PT = 21, AMP.

Node C further obtains an adaptation relationship of client signals supported by link 2 on a port of node B and an adaptation mode corresponding to the adaptation relationship.

The following further describes in detail the technical solution for establishing a connection by nodes A, B, C, and D on the server layer network.

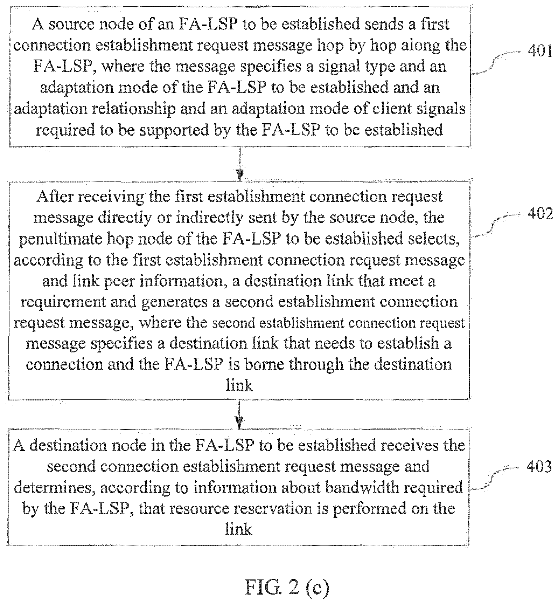

As shown in FIG. 2 (c), a method for establishing an FA-LSP connection according to Embodiment 3 of the present invention includes:

401. A source node of an FA-LSP to be established sends a first connection establishment request message hop by hop along the FA-LSP, where the message specifies a signal type and an adaptation mode of the FA-LSP to be established and an adaptation relationship and an adaptation mode of client signals required to be supported by the FA-LSP to be established.

For example: An ODU2 FA-LSP needs to be established among A-B-C-D, that is, the signal type of the FA-LSP is ODU2. ODU2 serve as client layer signals on the server layer network, and an adaptation mode of ODU2 adapting to an ODU3 link on the server layer network is as follows: TSG = 1.25 Gbps, PT = 21, AMP.

The ODU2 FA-LSP needs to bear the multiplexing from client signal ODU0 to client signal ODU2, the multiplexing from client signal ODU0 to client signal ODU1, and the multiplexing from client signal ODU1 to client signal ODU2. In this case, the first connection establishment request message sent by source node A specifies the preceding multiplexing relationships (that is, adaptation relationships) that need to be supported. Optionally, an adaptation mode of each multiplexing step is further specified. For example: from client signalODU0 to client signal ODU1: TSG = 1.25 Gbps, PT = 21, AMP; from client signal ODU0 to client signal ODU2: TSG = 1.25 Gbps, PT = 21, GMP; and from client signal ODU1 to client signal ODU2: TSG = 1.25 Gbps, PT = 21, AMP.

A specific implementation manner of step 401 is similar to that of step 301. Therefore, no further details are provided herein.

402. After receiving the first establishment connection request message directly or indirectly sent by the source node, the penultimate hop node of the FA-LSP to be established selects, according to the first establishment connection request message and link peer information, a destination link that meets a requirement and generates a second establishment connection request message, where the second establishment connection request message specifies a destination link through which a connection needs to be established and the FA-LSP is borne through the destination link.

For example: After receiving the first connection establishment request message, the penultimate hop node C determines peer information of three downstream links (link 3, link 4, and link 5), and the result is that only link 3 supports all required multiplexing relationships and tributary slot types. When a sufficient bandwidth is left on link 3 to establish the ODU2 FA-LSP, node C selects link 3 to bear the ODU2 FA-LSP and specifies the selected link in a connection establishment request message to be sent to node D.

A specific implementation manner of step 402 is similar to that of step 303. Therefore, no further details are provided herein.

403. A destination node in the FA-LSP to be established receives the second connection establishment request message and determines, according to information about bandwidth required by the FA-LSP, that resource reservation is performed on the link.

A specific implementation manner of step 403 is similar to that of step 304. Therefore, no further details are provided herein.

According to the method for establishing a forwarding adjacency - label switched path connection provided in this object 2 the first node is capable of determining, according to the signal and adaptation information of the FA-LSP, the signal and adaptation information of the FA-LSP at the client layer, and the link peer information saved by the first node, a destination link, and sending a second establishment connection request message that carries destination link information to the destination node of the FA-LSP to be established, so that the destination node establishes a connection to the first node through the destination link according to the second connection establishment request message. Therefore, the FA-LSP, after being established, is capable of bearing client signals that meet requirements of a client layer network.

The following should be noted:
1. The "link" in this object 2 may be a component link or a traffic engineering (Traffic Engineering, TE for short) link. The TE link may be formed by one component link or by binding multiple component links. If the TE link includes multiple component links, an adaptation relationship and an adaptation mode of client signals supported by a port corresponding to each component link on the TE link need to be obtained.
2. Each node in the FA-LSP to be established may locally perform route calculation according to information about the source node and the destination node to determine an adjacent downstream node. Alternatively, a connection establishment command may carry explicit routing information that includes the information about the source node and the destination node to allow each node on a connection to be established to determine an adjacent downstream node according to the explicit routing information. Alternatively, a source node on a connection to be established may locally perform route calculation according to the information about the source node and the destination node to obtain explicit routing information that includes the source node and the destination node, and carry the explicit routing information that includes the information about the source node and the destination node into the connection establishment request message to allow another node on the connection to be established to determine an adjacent downstream node according to the explicit routing information.

### Object 3

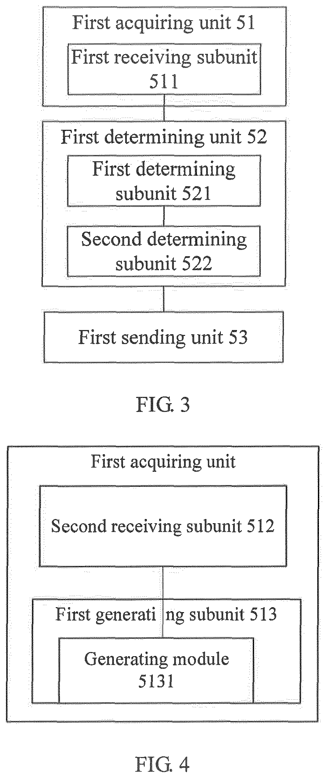

In one aspect, as shown in FIG. 3, object 3 provides an apparatus for establishing an FA-LSP connection. The apparatus is applied to a first node that serves as the penultimate hop node in an FA-LSP to be established and includes a first acquiring unit 51, a first determining unit 52, and a first sending unit 53.

The first acquiring unit 51 is configured to acquire a first connection establishment request message, where the first connection establishment request message includes signal and adaptation information of an FA-LSP and signal and adaptation information of the FA-LSP at a client layer. A specific implementation manner of the first acquiring unit 51 is similar to step 101 as shown in FIG. 1 (a), and no further details are provided herein.

Specifically, the first acquiring unit may include:
a first receiving subunit 511, configured to receive the first connection establishment request message sent by an upstream node.

Optionally, as shown in FIG. 4, the first acquiring unit may include:
a second receiving subunit 512, configured to receive a connection establishment command sent by a transmit end, where the connection establishment command includes the signal and adaptation information of the FA-LSP and first adaptation information, and the first adaptation information at least includes an adaptation relationship of client signals that the transmit end requests the FA-LSP to be established to support; and
a first generating subunit 513, configured to generate the first connection establishment request message according to the connection establishment command received by the second receiving subunit, where the signal and adaptation information of the FA-LSP at the client layer includes the first adaptation information.

In this embodiment, the first generating subunit may include:
a generating module 5131, configured to generate the first connection establishment request message according to the connection establishment command received by the second receiving subunit and second adaptation information, where the second adaptation information at least includes an adaptation relationship of client signals supported by a port of the first node, and the signal and adaptation information of the FA-LSP at the client layer further includes the second adaptation information.

The first determining unit 52 is configured to determine, according to the signal and adaptation information of the FA-LSP and the signal and adaptation information of the FA-LSP at the client layer that are acquired by the first acquiring unit and link peer information saved by the first node, a destination link between the first node and a destination node of the FA-LSP to be established, where the port of the destination link on the destination node in the FA-LSP to be established supports a signal type of the FA-LSP to be established and an adaptation mode corresponding to the signal type, and further supports an adaptation relationship of client signals required to be supported by the FA-LSP to be established and an adaptation mode corresponding to the adaptation relationship. A specific implementation manner of the first determining unit 52 is similar to step 102 as shown in FIG. 1 (a), and no further details are provided herein.

For example, the link peer information includes an adaptation relationship of client signals supported by a peer of a link and an adaptation mode corresponding to the adaptation relationship, where the adaptation relationship includes adaptation supporting an n^{th} client signal to an (n-1)^{th} client signal, ..., adaptation supporting a second client signal to a first client signal, and adaptation supporting the first client signal to the link, the adaptation mode includes an adaptation mode from the n^{th} client signal to the (n-1)^{th} client signal, ..., an adaptation mode from the second client signal to the first client signal, and an adaptation mode from the first client signal to the link, where n >= 2.

The first determining unit includes:
a first determining subunit 521, configured to determine, according to the signal and adaptation information of the FA-LSP and the link peer information saved by the first node, a link that supports the signals of the FA-LSP, where the first client signal in the link peer information of the link includes the signal type of the FA-LSP to be established, and the adaptation mode from the first client signal to the link includes the adaptation mode of the FA-LSP to be established; and
a second determining subunit 522, configured to determine, according to the signal and adaptation information of the FA-LSP at the client layer and the link peer information saved by the first node, a destination link from the link that supports the signals of the FA-LSP, where the adaptation supporting the n^{th} client signal to the (n-1)^{th} client signal, ..., and the adaptation supporting the second client signal to the first client signal in peer information of the destination link include the adaptation relationship of the client signals required to be supported by the FA-LSP to be established, and the adaptation mode from the n^{th} client signal to the (n-1)^{th} client signal, ..., and the adaptation mode from the second client signal to the first client signal include the adaptation mode corresponding to the adaptation relationship of the client signals required to be supported by the FA-LSP to be established.

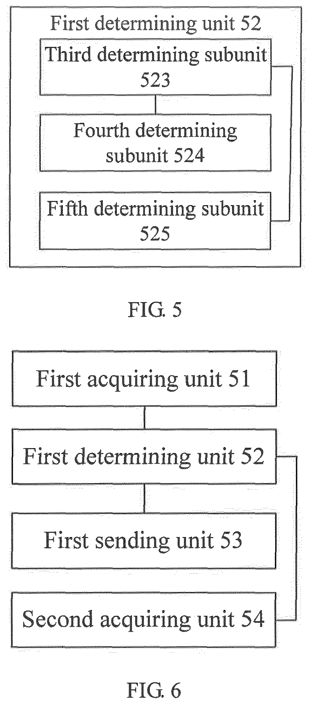

Specifically, as shown in FIG. 5, the first determining unit may further include:
a third determining subunit 523, configured to determine, according to the type information, the first adaptation information, and the link peer information saved by the first node, a link used to establish a connection;
a fourth determining subunit 524, configured to determine that the link used to establish a connection is a destination link if the third determining subunit determines that the link used to establish a connection is unique; and
a fifth determining subunit 525, configured to select, according to a preset local policy, a destination link from multiple links used to establish a connection if the third determining subunit determines that the multiple links used to establish a connection exist.

The first sending unit 53 is configured to send a second connection establishment request message to the destination node, where the second connection establishment request message carries destination link information so that the destination node establishes a connection to the first node through the destination link according to the second connection establishment request message. A specific implementation manner of the first sending unit 53 is similar to step 103 as shown in FIG. 1 (a), and no further details are provided herein.

Further, as shown in FIG. 6, the apparatus according to Embodiment 4 of the present invention may further include:
a second acquiring unit 54, configured to acquire link peer information if a link connection exists between the first node and an adjacent node, where the link peer information at least includes one of an adaptation relationship of client signals supported by a port of the adjacent node and an adaptation mode supported by the port of the adjacent node.

According to the apparatus for establishing a forwarding adjacency - label switched path connection provided in this object 3, a destination link between the first node and a destination node may be determined by using the apparatus and according to the signal and adaptation information of the FA-LSP, the signal and adaptation information at the client layer of the FA-LSP, and the link peer information saved by the first node. A second establishment connection request message carrying destination link information is sent to the destination node of the FA-LSP to be established, so that the destination node establishes a connection to the first node through the destination link according to the second connection establishment request message. Therefore, the FA-LSP, after being established, is capable of bearing client signals that meet requirements of a client layer network.

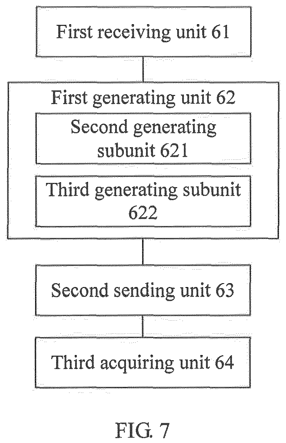

In another aspect, as shown in FIG. 7, object 3 further provides an apparatus for establishing an FA-LSP connection. The apparatus is applied to a second node that serves as a source node in an FA-LSP to be established and includes a first receiving unit 61, a first generating unit 62, and a second sending unit 63.

The first receiving unit 61 is configured to receive a connection establishment command sent by a transmit end, where the connection establishment command includes signal and adaptation information of an FA-LSP and first adaptation information, the signal and adaptation information of the FA-LSP at least includes a signal type of the FA-LSP to be established, and the first adaptation information at least includes an adaptation relationship of client signals that the transmit end requests the FA-LSP to be established to support. A specific implementation manner of the first receiving unit 61 is similar to step 201 as shown in FIG. 1 (b), and no further details are provided herein.

The first generating unit 62 is configured to generate a first connection establishment request message according to the connection establishment command received by the first receiving unit, where the first connection establishment request message includes the signal and adaptation information of the FA-LSP and signal and adaptation information of the FA-LSP at a client layer, and the signal and adaptation information of the FA-LSP at the client layer includes the first adaptation information. A specific implementation manner of the first generating unit 62 is similar to step 202 as shown in FIG. 1 (b), and no further details are provided herein.

Specifically, the first generating unit may include:
a second generating subunit 621, configured to generate a first connection establishment request message according to the connection establishment command received by the first receiving unit and second adaptation information, where the signal and adaptation information of the FA-LSP at the client layer further includes the second adaptation information, and the second adaptation information at least includes an adaptation relationship of client signals supported by a port of the second node.

Optionally, the first generating unit may further include:
a third generating subunit 622, configured to generate a first connection establishment request message according to the connection establishment command received by the first receiving unit and a local policy of the second node, where the signal and adaptation information of the FA-LSP at the client layer is generated according to the first adaptation information and the local policy of the second node.

The second sending unit 63 is configured to send hop by hop the first connection establishment request message generated by the first generating unit to a downstream node so that a first node that serves as the penultimate hop node in the FA-LSP to be established determines a destination link according to the first connection establishment request message and link peer information saved by the first node. A specific implementation manner of the second sending unit 63 is similar to step 203 as shown in FIG. 1 (b), and no further details are provided herein.

Further, the apparatus may further include:
a third acquiring unit 64, configured to acquire link peer information of a link between the second node and an adjacent node, where the link peer information at least includes an adaptation relationship of client signals supported by a port of the adjacent node.

According to the apparatus for establishing a forwarding adjacency - label switched path connection provided in this object 3, an establishment connection request message is sent hop by hop to the penultimate hop node by using the apparatus, so that the penultimate hop node determines, according to the signal and adaptation information of the FA-LSP, the signal and adaptation information at the client layer of the FA-LSP, and the link peer information saved by the first node, a destination link between the first node and a destination node and sends a second establishment connection request message that carries destination link information to the destination node of the FA-LSP to be established. Therefore, the destination node establishes a connection to the first node through the destination link according to the second connection establishment request message. Therefore, the FA-LSP, after being established, is capable of bearing client signals that meet requirements of a client layer network.

It may be clearly understood by a person skilled in the art that, for the purpose of convenient and brief description, for a detailed working process of the foregoing system, device and unit, reference may be made to a corresponding process in the method embodiments, and therefore, no further details are provided herein.

In conclusion, the technical solutions in the embodiments of the present invention are compared with technical solutions in the prior art.

A person skilled in the art may be aware that, in combination with the methods described in the embodiments disclosed in this specification, the steps and units may be implemented by electronic hardware, computer software, or a combination thereof. To clearly describe the interchangeability between the hardware and the software, the foregoing has generally described compositions and steps of every embodiment according to functions. Whether the functions are performed by hardware or software depends on particular applications and design constraint conditions of the technical solutions. A person skilled in the art may use different methods to implement the described functions for each particular application.

The embodiments in the foregoing descriptions are merely provided for describing the technical solutions of the present invention other than limiting the present invention. Although the present invention is described in detail with reference to the foregoing embodiments, a person of ordinary skill in the art should understand that they may still make modifications to the technical solutions described in the foregoing embodiments, or make equivalent replacements to part of the technical features thereof, without departing from the scope of the technical solutions of the embodiments of the present invention.

## Claims

1. A method for establishing a forwarding adjacency - label switched path FA-LSP connection, applied to a first node that serves as the penultimate hop node in an FA-LSP to be established,
the method comprising the step:
acquiring a first connection establishment request message, wherein the first connection establishment request message comprises a signal type of the FA-LSP to be established, an adaptation mode from a signal of the FA-LSP to a link on a server layer network, an adaptation relationship from a client signal to a signal of the FA-LSP and an adaptation mode corresponding to the adaptation relationship (101);
the method being **characterized in that** it further comprises the steps:
determining,
according to the signal type of the FA-LSP to be established, the adaptation mode from the signal of the FA-LSP to the link on the server layer network, the adaptation relationship from the client signal to the signal of the FA-LSP, the adaptation mode corresponding to the adaptation relationship and to link peer information saved by the first node,
a destination link between the first node and a destination node of the FA-LSP to be established, wherein the port of the destination link on the destination node in the FA-LSP to be established supports the signal type of the FA-LSP to be established and the adaptation mode from the signal of the FA-LSP to the link on the server layer network, and further supports the adaptation relationship from the client signal to the signal of the FA-LSP and the adaptation mode corresponding to the adaptation relationship (102); and
sending a second connection establishment request message to the destination node, wherein the second connection establishment request message carries destination link information, so that the destination node establishes a connection to the first node through the destination link according to the second connection establishment request message (103).

2. The method according to claim 1, wherein when the adaptation relationship of the client signals is an optical channel data unit ODU multi-step multiplexing relationship, the adaptation mode corresponding to the adaptation relationship at least comprises one of tributary slot granularity information and payload type information.

3. A first node for establishing a forwarding adjacency - label switched path FA-LSP connection, wherein the first node is adapted to serve as the penultimate hop node in an FA-LSP to be established,
wherein the fist node comprises:
a first acquiring unit (51), configured to acquire a first connection establishment request message, wherein the first connection establishment request message comprises a signal type of the FA-LSP to be established, an adaptation mode from a signal of the FA-LSP to a link on a server layer network, an adaptation relationship from a client signal to a signal of the FA-LSP and an adaptation mode corresponding to the adaptation relationship;
the first node being **characterized in that** it further comprises:
a first determining unit (52), configured to determine,
according to the signal type of the FA-LSP to be established, the adaptation mode from the signal of the FA-LSP to the link on the server layer network, the adaptation relationship from the client signal to the signal of the FA-LSP and the adaptation mode corresponding to the adaptation relationship that are acquired by the first acquiring unit and to link peer information saved by the first node,
a destination link between the first node and a destination node of the FA-LSP to be established, wherein the port of the destination link on the destination node in the FA-LSP to be established supports the signal type of the FA-LSP to be established and the adaptation mode from the signal of the FA-LSP to the link on the server layer network, and further supports the adaptation relationship from the client signal to the signal of the FA-LSP and the adaptation mode corresponding to the adaptation relationship; and
a first sending unit (53), configured to send a second connection establishment request message to the destination node, wherein the second connection establishment request message carries destination link information, so that the destination node establishes a connection to the first node through the destination link according to the second connection establishment request message.

## Patentansprüche

1. Verfahren zur Herstellung einer Weiterleitungsadjazenz-"Label Switched Path"- bzw. FA-LSP-Verbindung, das auf einen ersten Knoten angewandt wird, der als der vorletzte Sprungknoten in einem herzustellenden FA-LSP dient, wobei das Verfahren den folgenden Schritt umfasst:
Beschaffen einer ersten Verbindungsherstellungs-Anforderungsnachricht, wobei die erste Verbindungsherstellungs-Anforderungsnachricht einen Signaltyp des herzustellenden FA-LSP, einen Anpassungsmodus von einem Signal des FA-LSP zu einer Strecke in einem Serverschicht-Netz, eine Anpassungsbeziehung von einem Client-Signal zu einem Signal des FA-LSP und einen Anpassungsmodus entsprechend der Anpassungsbeziehung umfasst (101);
wobei das Verfahren **dadurch gekennzeichnet ist, dass** es ferner die folgenden Schritte umfasst:
Bestimmen einer Zielstrecke zwischen dem ersten Knoten und einem Zielknoten des herzustellenden FA-LSP gemäß dem Signaltyp des herzustellenden FA-LSP, dem Anpassungsmodus von dem Signal des FA-LSP zu der Strecke in dem Serverschicht-Netz, der Anpassungsbeziehung von dem Client-Signal zu dem Signal des FA-LSP, dem Anpassungsmodus entsprechend der Anpassungsbeziehung und durch den ersten Knoten abgespeicherten Strecken-Peer-Informationen, wobei der Port der Zielstrecke an dem Zielknoten in dem herzustellenden FA-LSP den Signaltyp des herzustellenden FA-LSP und den Anpassungsmodus von dem Signal des FA-LSP zu der Strecke in dem Serverschicht-Netz unterstützt und ferner die Anpassungsbeziehung von dem Client-Signal zu dem Signal des FA-LSP und den Anpassungsmodus entsprechend der Anpassungsbeziehung unterstützt (102); und Senden einer zweiten Verbindungsherstellungs-Anforderungsnachricht zu dem Zielknoten, wobei die zweite Verbindungsherstellungs-Anforderungsnachricht Zielstreckeninformationen führt, so dass der Zielknoten eine Verbindung zu dem ersten Knoten mittels der Zielstrecke gemäß der zweiten Verbindungsherstellungs-Anforderungsnachricht herstellt (103).

2. Verfahren nach Anspruch 1, wobei, wenn die Anpassungsbeziehung der Client-Signale eine optische Kanaldateneinheiten- bzw. ODU-Mehrstufen-Multiplexbeziehung ist, der Anpassungsmodus entsprechend der Anpassungsbeziehung Zubringerschlitz-Granularitätsinformationen und/oder Nutzinformationstypinformationen umfasst.

3. Erster Knoten zur Herstellung einer Weiterleitungsadjazenz-"Label Switched Path"- bzw. FA-LSP-Verbindung, wobei der erste Knoten dazu eingerichtet ist, als der vorletzte Sprungknoten in einem herzustellenden FA-LSP zu dienen, wobei der erste Knoten Folgendes umfasst:
eine erste Beschaffungseinheit (51), ausgelegt zum Beschaffen einer ersten Verbindungsherstellungs-Anforderungsnachricht, wobei die erste Verbindungsherstellungs-Anforderungsnachricht einen Signaltyp des herzustellenden FA-LSP, einen Anpassungsmodus von einem Signal des FA-LSP zu einer Strecke in einem Serverschicht-Netz, eine Anpassungsbeziehung von einem Client-Signal zu einem Signal des FA-LSP und einen Anpassungsmodus entsprechend der Anpassungsbeziehung umfasst;
wobei der erste Knoten **dadurch gekennzeichnet ist, dass** er ferner Folgendes umfasst:
eine erste Bestimmungseinheit (52), ausgelegt zum Bestimmen einer Zielstrecke zwischen dem ersten Knoten und einem Zielknoten des herzustellenden FA-LSP gemäß dem Signaltyp des herzustellenden FA-LSP, dem Anpassungsmodus von dem Signal des FA-LSP zu der Strecke in dem Serverschicht-Netz, der Anpassungsbeziehung von dem Client-Signal zu dem Signal des FA-LSP und dem Anpassungsmodus entsprechend der Anpassungsbeziehung, die von der ersten Beschaffungseinheit beschafft werden, und durch den ersten Knoten abgespeicherten Strecken-Peer-Informationen, wobei der Port der Zielstrecke an dem Zielknoten in dem herzustellenden FA-LSP den Signaltyp des herzustellenden FA-LSP und den Anpassungsmodus von dem Signal des FA-LSP zu der Strecke in dem Serverschicht-Netz unterstützt und ferner die Anpassungsbeziehung von dem Client-Signal zu dem Signal des FA-LSP und den Anpassungsmodus entsprechend der Anpassungsbeziehung unterstützt; und
eine erste Sendeeinheit (53), ausgelegt zum Senden einer zweiten Verbindungsherstellungs-Anforderungsnachricht zu dem Zielknoten, wobei die zweite Verbindungsherstellungs-Anforderungsnachricht Zielstreckeninformationen führt, so dass der Zielknoten eine Verbindung zu dem ersten Knoten mittels der Zielstrecke gemäß der zweiten Verbindungsherstellungs-Anforderungsnachricht herstellt.

## Revendications

1. Procédé destiné à établir une connexion à contiguïté de transfert de trajet à commutation d'étiquette FA-LSP appliquée à un premier noeud qui joue le rôle du noeud d'avant-dernier bond dans un FA-LSP devant être établi, le procédé comprenant l'étape consistant à :
acquérir un premier message de demande d'établissement de connexion, dans lequel le premier message de demande d'établissement de connexion comprend un type de signal du FA-LSP devant être établi, un mode d'adaptation d'un signal du FA-LSP à une liaison sur un réseau de couche de serveur, une relation d'adaptation d'un signal client à un signal du FA-LSP et un mode d'adaptation correspondant à la relation d'adaptation (101) ;
le procédé étant **caractérisé en ce qu'**il comprend en outre les étapes consistant à :
déterminer, conformément au type de signal du FA-LSP devant être établi, le mode d'adaptation du signal du FA-LSP à la liaison sur le réseau de couche de serveur, la relation d'adaptation du signal client au signal du FA-LSP, le mode d'adaptation correspondant à la relation d'adaptation et à des informations d'homologues de liaison sauvegardées par le premier noeud, une liaison de destination entre le premier noeud et un noeud de destination du FA-LSP devant être établi, dans lequel le port de la liaison de destination sur le noeud de destination dans le FA-LSP devant être établi prend en charge le type de signal du FA-LSP devant être établi et le mode d'adaptation du signal du FA-LSP à la liaison sur le réseau de couche de serveur, et prend en outre en charge la relation d'adaptation du signal client au signal du FA-LSP et le mode d'adaptation correspondant à la relation d'adaptation (102) ; et
envoyer un deuxième message de demande d'établissement de connexion au noeud de destination, dans lequel le deuxième message de demande d'établissement de connexion transporte des informations de liaison de destination, de manière à ce que le noeud de destination établisse une connexion au premier noeud par l'intermédiaire de la liaison de destination conformément au deuxième message de demande d'établissement de connexion (103).

2. Procédé selon la revendication 1, dans lequel, lorsque la relation d'adaptation définie par les signaux clients est une relation de multiplexage à pas multiples d'unités de données de canal optique ODU, le mode d'adaptation correspondant à la relation d'adaptation comprend au moins l'une d'informations de granularité de créneau tributaire et d'informations de type de charge utile.

3. Premier noeud destiné à établir une connexion à contiguïté de transfert de trajet à commutation d'étiquette FA-LSP, dans lequel le premier noeud est apte à jouer le rôle du noeud d'avant-dernier bond dans un FA-LSP devant être établi, dans lequel le premier noeud comprend :
une première unité d'acquisition (51), configurée pour acquérir un premier message de demande d'établissement de connexion, dans lequel le premier message de demande d'établissement de connexion comprend un type de signal du FA-LSP devant être établi, un mode d'adaptation d'un signal du FA-LSP à une liaison sur un réseau de couche de serveur, une relation d'adaptation d'un signal client à un signal du FA-LSP et un mode d'adaptation correspondant à la relation d'adaptation ;
le premier noeud étant **caractérisé en ce qu'**il comprend en outre :
une première unité de détermination (52), configurée pour déterminer, conformément au type de signal du FA-LSP devant être établi, le mode d'adaptation du signal du FA-LSP à la liaison sur le réseau de couche de serveur, la relation d'adaptation du signal client au signal du FA-LSP et le mode d'adaptation correspondant à la relation d'adaptation, qui sont acquis par la première unité d'acquisition, et à des informations d'homologues de liaison sauvegardées par le premier noeud, une liaison de destination entre le premier noeud et un noeud de destination du FA-LSP devant être établi, dans lequel le port de la liaison de destination sur le noeud de destination dans le FA-LSP devant être établi prend en charge le type de signal du FA-LSP devant être établi et le mode d'adaptation du signal du FA-LSP à la liaison sur le réseau de couche de serveur, et prend en outre en charge la relation d'adaptation du signal client au signal du FA-LSP et le mode d'adaptation correspondant à la relation d'adaptation ; et
une première unité d'envoi (53), configurée pour envoyer un deuxième message de demande d'établissement de connexion au noeud de destination, dans lequel le deuxième message de demande d'établissement de connexion transporte des informations de liaison de destination, de manière à ce que le noeud de destination établisse une connexion au premier noeud par l'intermédiaire de la liaison de destination conformément au deuxième message de demande d'établissement de connexion.
